# EUROPÄISCHE PATENTSCHRIFT

(11) **EP 1 735 195 B1**
(45) Veröffentlichungstag und Bekanntmachung des Hinweises auf die Patenterteilung: **17.08.2011**
(21) Anmeldenummer: 05716693.6
(22) Anmeldetag: 14.02.2005
(51) Int. Cl.: B60S 1/04

(54) **SCHEIBENWISCHVORRICHTUNG**
WINDSCREEN WIPER SYSTEM
SYSTEME D'ESSUIE-GLACE

(30) Priorität: 06.04.2004 DE 102004016917
(43) Veröffentlichungstag der Anmeldung: 27.12.2006
(73) Patentinhaber: ROBERT BOSCH GMBH, 70442 Stuttgart (DE)
(72) Erfinder: RAPP, Juergen, 77886 Lauf (DE); STEIMEL, Thomas, 77815 Buehl (DE)
(86) Internationale Anmeldenummer: PCT/EP2005/050644
(87) Internationale Veröffentlichungsnummer: WO 2005/097566

(56) Entgegenhaltungen:
- WO-A-99/43521
- GB-A- 2 347 340

## Beschreibung

Die Erfindung betrifft eine Karosserie mit einer Scheibenwischvorrichtung, insbesondere für ein Kraftfahrzeug, mit einem an der Karosserie verbundenen Formrohr und/oder mit einem an der Karosserie verbundenen Befestigungsblech, das insbesondere ein Befestigungsblech für einen Wischermotor ist.

Fußgänger sind beim Zusammenstoss mit Fahrzeugen völlig ungeschützt. Besonders die unnachgiebigen, harten Teile unterhalb der Motorhaube führen oft zu schweren Verletzungen beim Aufprall eines Fußgängers auf ein Fahrzeug. Die Scheibenwischvorrichtung befindet sich in einem Bereich, in dem Fußgänger beim Aufprall auf ein Fahrzeug häufig auftreffen. Die allgemein aus dem Stand der Technik bekannten Scheibenwischvorrichtungen haben den Nachteil, dass sie eine große Verletzungsgefahr für den Fußgänger beim Aufprall auf das Fahrzeug darstellen.

Aus der GB 2347340 A ist eine Scheibenwischvorrichtung bekannt, die mit einem Sicherheitssystem zum Lösen einer Wischerwelle aus einem aufnehmenden Gehäuse bei einem Aufprall versehen ist. Übersteigt eine auf die Wischerwelle wirkende Axialkraft einen Schwellenwert, so kann sich die Wischerwelle axial in ihrer Aufnahme im Gehäuse bewegen. Die Wischerwelle ist hierfür über verschiedene Befestigungsmaßnahmen lösbar in der Aufnahme im Gehäuse gehalten, beispielsweise über Sicherungsringe.

Der Schwellenwert, bei dessen Übersteigen sich die Wischerwelle aus ihrer Aufnahme im Gehäuse löst, hängt vom Material und den Dimensionierungen der Sicherungsringe ab, welche in Ringnuten an der Innenwand der Aufnahme im Gehäuse aufgenommen sind. Den Schwellenwert möglichst exakt festzulegen, stellt jedoch eine schwierig zu realisierende Maßnahme dar.

Aus der WO 99/43521 A1 ist eine Scheibenwischvorrichtung mit einer formschlüssigen Verbindung zwischen einem Formrohr zur Aufnahme einer Wischerwelle und der Fahrzeugkarosserie bekannt. Einteilig mit dem Formrohr ist ein Blech mit einer Ausnehmung ausgebildet, die eine verhältnismäßig große radiale, segmentförmige Öffnung aufweist, über die das Blech mit der Ausnehmung auf einen Vorsprung an der Fahrzeugkarosserie aufgezogen wird. Die Öffnung erstreckt sich über ein verhältnismäßig großes Winkelsegment, was Voraussetzung dafür ist, dass das Blech mit der Ausnehmung zur Montage auf den Vorsprung aufgeschoben werden kann.

Der Erfindung liegt die Aufgabe zugrunde, die Verletzungsgefahr für einen Fußgänger beim Aufprall auf ein Fahrzeug zu reduzieren.

Die Erfindung löst die gestellte Aufgabe durch eine Karosserie mit einer Scheibenwischvorrichtung der eingangs genannten Art, bei der erfindungsgemäß das Formrohr und/oder das Befestigungsblech lösbar mit der Karosserie befestigt ist, sodass das Formrohr und/oder das Befestigungsblech bei einem Aufprall auf die Scheibenwischvorrichtung von der Karosserie lösbar ist. Durch das Lösen des Formrohrs und/oder des Befestigungsblechs von der Karosserie beim Aufprall eines Fußgängers auf die Scheibenwischvorrichtung kann das Formrohr und/oder das Befestigungsblech dem Aufprall ausweichen, wodurch die Verletzungsgefahr für den Fußgänger deutlich reduziert wird.

In einer Weiterbildung der Erfindung weist die Karosserie zur Aufnahme des Formrohrs oder des Befestigungsblechs eine Aufnahmeöffnung auf, die mit einem seitlichen Schlitz versehen ist. Das Formrohr oder das Befestigungsblech können zur Befestigung mit der Karosserie in die Aufnahmeöffnung eingesteckt werden. Bei einem Aufprall auf das Formrohr oder auf das Befestigungsblech wird das Formrohr oder das Befestigungsblech über den seitlichen Schlitz aus der Aufnahmeöffnung herausgedrückt. Beim Herausdrücken weiten sich der Schlitz und die Aufnahmeöffnung auf. Damit das Formrohr oder das Befestigungsblech zuverlässig durch den Schlitz aus der Aufnahmeöffnung herausgedrückt wird, ist es zweckmäßig, wenn der Schlitz in Wirkrichtung der Aufprallkraft betrachtet am hinteren Öffnungsrand angeordnet ist. Es ist jedoch nicht zwingend erforderlich den Schlitz in Wirkrichtung der Aufprallkraft betrachtet am hinteren Öffnungsrand anzuordnen, um ein zuverlässiges Lösen des Formrohrs oder des Befestigungsblechs sicherzustellen. Ferner muss die Wirkrichtung der Aufprallkraft nicht parallel zu der in der Karosserie angebrachten Aufnahmeöffnung wirken, um das Formrohr oder das Befestigungsblech zuverlässig beim Aufprall zu lösen. Wenn die Aufprallkraft in einem Winkel zwischen 0 Grad und 90 Grad zur Aufnahmeöffnung wirkt, übt das Formrohr oder das Befestigungsblech in der Aufnahmeöffnung eine Schwenkbewegung aus, wodurch der Schlitz und die Aufnahmeöffnung aufgeweitet werden, und sich das Formrohr oder das Befestigungsblech von der Karosserie lösen kann. Folglich ist das zuverlässige Lösen des Formteils oder des Blechteils von der Karosserie unabhängig von der Wirkrichtung der Aufprallkraft. Vorteilhafterweise ist das Formrohr oder das Befestigungsblech so stark in die Aufnahmeöffnung eingepresst, dass eine weitere Befestigung mittels Schrauben oder dergleichen nicht mehr erforderlich ist. Dadurch wird der Montageaufwand deutlich reduziert.

Wenn die Aufnahmeöffnung einen umgebördelten Rand aufweist, kann die Lösekraft zum Lösen des Formrohrs oder des Befestigungsblechs durch die Höhe der Umbördelung eingestellt werden. Außerdem ist die Lösekraft auch von der Dicke des Karosserieblechs im Bereich der Aufnahmeöffnung abhängig.

Da der Lösevorgang des Formrohrs oder des Befestigungsblechs einen gewissen Bewegungsspielraum für das Formrohr oder für das Blechteil erfordert, ist es zweckmäßig, wenn die Aufnahmeöffnung in einem von der Karosserie abstehenden Karosseriebereich angeordnet ist.

Um das Formrohr oder das Befestigungsblech optimal in die Aufnahmeöffnung in der Karosserie einstecken zu können, ist es vorteilhaft, wenn das Formrohr und/oder das Befestigungsblech einen Vorsprung aufweist.

In einer weiteren Ausführungsform kann zwischen dem Formrohr und der Karosserie und/oder zwischen dem Befestigungsblech und der Karosserie ein Dichtelement vorgesehenen sein. Das Dichtelement verhindert, dass Feuchtigkeit und Schmutz durch die Aufnahmeöffnung in die Karosserie eindringen können.

Damit das Dichtelement zwischen dem Formrohr und der Karosserie und/oder zwischen dem Befestigungsblech und der Karosserie angeordnet werden kann, kann das Dichtelement in die Aufnahmeöffnung in der Karosserie eingesteckt werden und das Dichtelement ebenfalls eine Öffnung zur Aufnahme des Formrohrs oder des Befestigungsblechs aufweisen.

In einer Weiterbildung der Erfindung kann das Dichtelement eine umlaufende gegen die Karosserie drückende Dichtlippe besitzen. Die Dichtlippe verbessert einerseits die Dichtwirkung des Dichtelements, insbesondere gegen Spritzwasser, und andererseits ermöglicht sie einen Toleranzausgleich zwischen dem Formrohr und der Karosserie oder zwischen dem Befestigungsblech und der Karosserie.

Damit ein unerwünschtes Herunterrutschen des Dichtelements vom Formrohr oder vom Befestigungsblech vermieden werden kann, kann das Formrohr und/oder das Befestigungsblech ein Rastelement zur Fixierung des Dichtelements besitzen. Damit das Rastelement in das Dichtelement eingreifen kann, ist in dem Dichtelement zweckmäßigerweise eine Ausnehmung vorgesehen.

Um die Steifigkeit des Befestigungsblechs zu erhöhen, ist ein wellenförmiger Querschnitt vorgesehen. Der Vorsprung des Formrohrs und der Vorsprung des Befestigungsbleches weisen ebenfalls einen wellenförmigen Querschnitt auf. Erfindungsgemäß ist die Kontur der Aufnahmeöffnung an den gewellten Querschnitt des Vorsprungs des Formrohrs und/oder an den gewellten Querschnitt des Vorsprungs des Befestigungsblechs angepasst.

Da das das Formrohr oder das Befestigungsblech mit seinem Vorsprung in das Dichtelement einsteckbar ist, kann das Dichtelement ebenfalls an den gewellten Querschnitt des Vorsprungs angepasst sein. Die Anpassung des Dichtelements an den gewellten Querschnitt des Vorsprungs gewährleistet außerdem einen sicheren Halt des Dichtelements auf dem Vorsprung.

Die Dichtwirkung und der Toleranzausgleich werden verbessert, wenn das Dichtelement aus einem Elastomer gefertigt ist.

Nachfolgend werden verschiedene Ausführungsbeispiele anhand der beiliegenden Zeichnungen näher erläutert.

Im Einzelnen zeigen:
- Fig. 1: eine perspektivische Draufsicht auf ein in ein Karosserieblech eingestecktes Formrohr;
- Fig. 2: eine perspektivische Draufsicht auf ein in das Karosserieblech eingesteckte Befestigungs- blech;
- Fig. 3: einen Längsschnitt durch ein Dichtelement;
- Fig. 4: eine Draufsicht auf das Dichtelement aus Fig. 3;
- Fig. 5: eine Draufsicht auf das Dichtelement aus Fig. 4 von der gegenüberliegenden Seite.

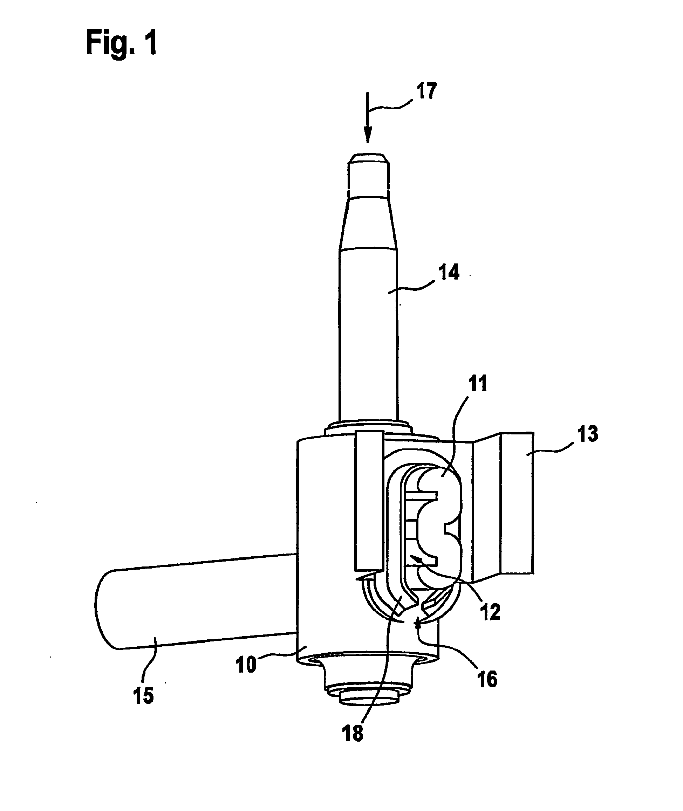

Fig. 1 zeigt ein Formrohr 10 mit einem Vorsprung 11. Der Vorsprung 11 ist in eine Aufnahmeöffnung 12 einer hier ausschnittsweise dargestellten Karosserie 13 gesteckt. Das Formrohr 10 nimmt eine Wischerwelle 14 auf. Außerdem ist an dem Formrohr 10 ein Crimpzapfen 15 zur Aufnahme eines hier nicht näher dargestellten Platinenrohres angebracht. Die Aufnahmeöffnung 12 ist mit einem Schlitz 16 versehen. Wenn eine Aufprallkraft 17 beispielsweise auf die Wischerwelle 14 und das Formrohr 10 oder über das Platinenrohr, den Crimpzapfen 15 und das Formrohr 10 wirkt, wird der Vorsprung 11 über den Schlitz 16 aus der Aufnahmeöffnung 12 herausgedrückt. Folglich können die Wischerwelle 14 und das Formrohr 10 der Aufprallkraft 17 ausweichen, wodurch die Verletzungsgefahr eines aufprallenden Fußgängers stark reduziert wird.

Die Aufnahmeöffnung 12 weist einen umlaufenden Rand 18 auf. Abhängig von der Höhe der Umbördelung kann eine Lösekraft zum Lösen des Formrohrs 10 eingestellt werden. Außerdem hängt die Lösekraft auch von der Dicke des Blechs der Karosserie 13 im Bereich der Aufnahmeöffnung 12 ab.

Die Aufnahmeöffnung 12 ist in einem von der Karosserie 13 abstehenden Bereich angeordnet. Dadurch steht dem Formrohr 10 für den Lösevorgang von der Karosserie 13 ein erforderlicher Bewegungsspielraum zur Verfügung.

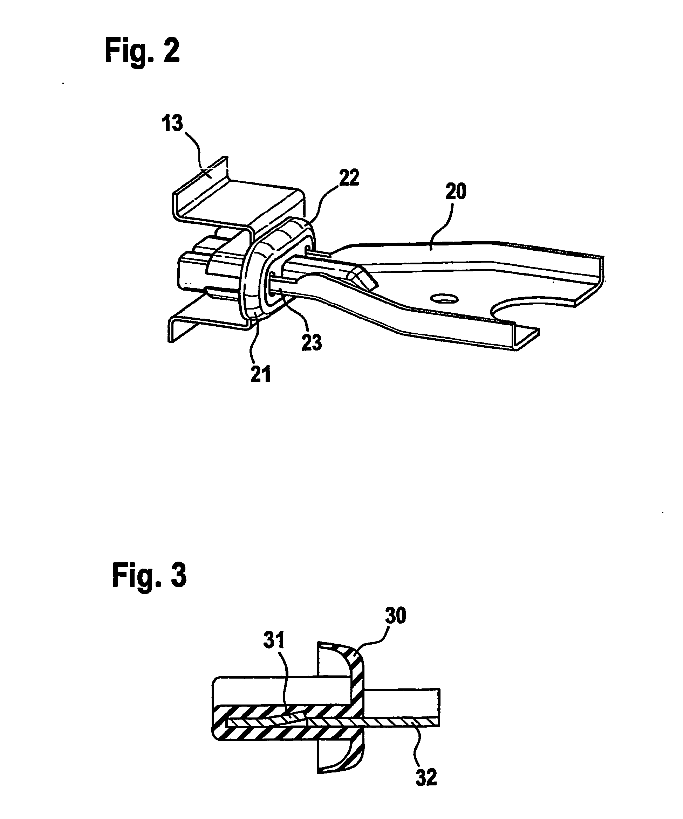

Fig. 2 zeigt ein Befestigungsblech 20, das ein Befestigungsblech für einen hier nicht näher dargestellten Wischermotors sein kann. Das Befestigungsblech 20 weist einen Vorsprung 23 auf, der in die hier ebenfalls ausschnittsweise dargestellte Karosserie 13 gesteckt ist. Zwischen dem Befestigungsblech 20 und der Karosserie 13 ist im Bereich des Vorsprunges 23 ein Dichtelement 21 angeordnet. Das Dichtelement 21 ist über den Vorsprung 23 gesteckt und verhindert ein unerwünschtes Eindringen von Feuchtigkeit und Schmutz in die Karosserie 13. Das Dichtelement 21 ist mit einer umlaufenden Dichtlippe 22 versehen. Die Dichtlippe 22 verbessert die Dichtwirkung, insbesondere gegen Spritzwasser. Außerdem ermöglicht sie einen Toleranzausgleich zwischen dem Befestigungsblech 20 und der Karosserie 13.

Fig. 3 zeigt ein Dichtelement 30, in das ein Rastelement 31 eines Befestigungsblechs 32 einrasten kann. Das Rastelement 31 verhindert somit ein unerwünschtes Herunterrutschen des Dichtelements 30 von dem Befestigungsblech 32.

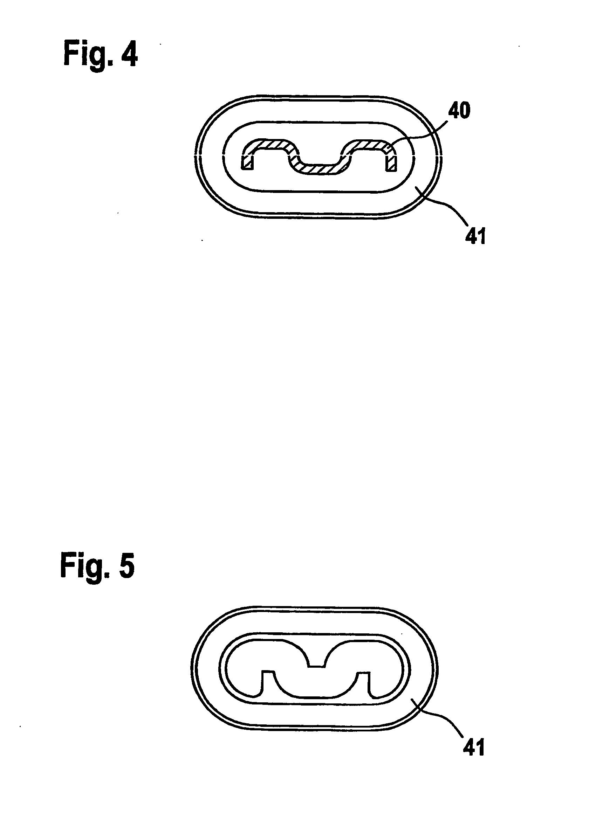

Fig. 4 zeigt ein Befestigungsblech 40, das einen wellenförmigen Querschnitt aufweist. Der wellenförmige Querschnitt erhöht die Steifigkeit des Befestigungsblechs 40. Das Befestigungsblech 40 ist in ein Dichtelement 41 gesteckt. Die Öffnung in dem Dichtelement 41 zur Aufnahme des Befestigungsblechs 40 ist an den wellenförmigen Querschnitt des Befestigungsblechs 40 angepasst. Die Anpassung des Dichtelements 41 an den gewellten Querschnitt des Befestigungsblechs 40 gewährleistet außerdem einen sicheren Halt zwischen dem Dichtelement 41 und dem Befestigungsblech 40.

Um die Dichtwirkung des Dichtelements 41 zu erhöhen, ist es an seiner der Öffnung zur Aufnahme des Befestigungsblechs 40 gegenüberliegenden Seite verschlossen (siehe Fig. 5). Somit können weder Feuchtigkeit noch Schmutz in die Karosserie eindringen.

## Patentansprüche

1. Karosserie mit einer Scheibenwischvorrichtung, insbesondere für ein Kraftfahrzeug, mit einem an der Karosserie (13) verbundenen Formrohr (10) und/oder mit einem an der Karosserie (13) verbundenen Befestigungsblech (20,32, 40), das insbesondere ein Befestigungsblech (20, 32, 40) für einen Wischermotor ist, wobei das Formrohr (10) und/oder das Befestigungsblech (20, 32, 40) lösbar mit der Karosserie (13) befestigt ist, sodass das Formrohr (10) und/oder das Befestigungsblech (20, 32, 40) bei einem Aufprall auf die Scheibenwischvorrichtung von der Karosserie (13) lösbar ist,
**dadurch gekennzeichnet, dass** die Karosserie (13) zur Aufnahme des Formrohrs (10) oder des Befestigungsblechs (20, 32, 40) eine Aufnahmeöffnung (12) aufweist, die mit einem seitlichen Schlitz (16) versehen ist, und dass die Kontur der Aufnahmeöffnung (12) an einen gewellten Querschnitt des Vorsprunges (11) des Formrohrs (10) und/oder an einen gewellten Querschnitt des Vorsprungs (23) des Befestigungsblechs (20,32, 40) angepasst ist.

2. Karosserie mit einer Scheibenwischvorrichtung nach Anspruch 1,
**dadurch gekennzeichnet, dass** die Aufnahmeöffnung (12) einen umgebördelten Rand (18) aufweist.

3. Karosserie mit einer Scheibenwischvorrichtung nach Anspruch 1 oder 2,
**dadurch gekennzeichnet, dass** die Aufnahmeöffnung (12) in einem von der Karosserie (13) abstehenden Karosseriebereich angeordnet ist.

4. Karosserie mit einer Scheibenwischvorrichtung nach einem der Ansprüche 1 bis 3,
**dadurch gekennzeichnet, dass** der Vorsprung (11, 23) des Formrohr (10) und/oder des Befestigungsbleches (20, 32, 40) in die Aufnahmeöffnung (12) in der Karosserie (13) einsteckbar ist.

5. Karosserie mit einer Scheibenwischvorrichtung nach einem der Ansprüche 1 bis 4,
**dadurch gekennzeichnet, dass** zwischen dem Formrohr (10) und der Karosserie (13) und/oder zwischen dem Befestigungsblech (20, 32, 40) und der Karosserie (13) ein Dichtelement (21, 30, 41) vorgesehen ist.

6. Karosserie mit einer Scheibenwischvorrichtung nach Anspruch 5,
**dadurch gekennzeichnet, dass** das Dichtelement (21, 30, 41) eine Öffnung zur Aufnahme des Formrohrs (10) oder des Befestigungsblechs (20,32, 40) aufweist.

7. Karosserie mit einer Scheibenwischvorrichtung nach Anspruch 5 oder 6,
**dadurch gekennzeichnet, dass** das Dichtelement (21,30, 41) eine umlaufende, gegen die Karosserie drückende Dichtlippe (22) aufweist.

8. Karosserie mit einer Scheibenwischvorrichtung nach einem der Ansprüche 5 bis 7,
**dadurch gekennzeichnet, dass** das Formrohr (10) und/oder das Befestigungsblech (32) ein Rastelement (31) zur Fixierung des Dichtelements (30) aufweist.

9. Karosserie mit einer Scheibenwischvorrichtung nach einem der Ansprüche 5 bis 8,
**dadurch gekennzeichnet, dass** das Dichtelement (21, 30, 41) ebenfalls an den gewellten Querschnitt des Vorsprungs (11, 23) angepasst ist.

10. Karosserie mit einer Scheibenwischvorrichtung nach einem der Ansprüche 5 bis 9,
**dadurch gekennzeichnet, dass** das Dichtelement (21, 30, 41) aus einem Elastomer gefertigt ist.

## Claims

1. Body with a windscreen wiper device, in particular for a motor vehicle, with a shaped tube (10) which is connected to the body (13) and/or with a fastening plate (20, 32, 40) which is connected to the body (13) and is in particular a fastening plate (20, 32, 40) for a wiper motor, wherein the shaped tube (10) and/or the fastening plate (20, 32, 40) are/is fastened releasably to the body (13) such that the shaped tube (10) and/or the fastening plate (20, 32, 40) can be released from the body (13) in the event of an impact on the windscreen wiper device, **characterized in that** the body (13) has a receiving opening (12) for receiving the shaped tube (10) or the fastening plate (20, 32, 40), said receiving opening being provided with a lateral slot (16), and **in that** the contour of the receiving opening (12) is matched to a corrugated cross section of the projection (11) of the shaped tube (10) and/or to a corrugated cross section of the projection (23) of the fastening plate (20, 32, 40).

2. Body with a windscreen wiper device according to Claim 1, **characterized in that** the receiving opening (12) has a flanged edge (18).

3. Body with a windscreen wiper device according to Claim 1 or 2, **characterized in that** the receiving opening (12) is arranged in a body region protruding from the body (13).

4. Body with a windscreen wiper device according to one of Claims 1 to 3, **characterized in that** the projection (11, 23) of the shaped tube (10) and/or of the fastening plate (20, 32, 40) can be plugged into the receiving opening (12) in the body (13).

5. Body with a windscreen wiper device according to one of Claims 1 to 4, **characterized in that** a sealing element (21, 30, 41) is provided between the shaped tube (10) and the body (13) and/or between the fastening plate (20, 32, 40) and the body (13).

6. Body with a windscreen wiper device according to Claim 5, **characterized in that** the sealing element (21, 30, 41) has an opening for receiving the shaped tube (10) or the fastening plate (20, 32, 40).

7. Body with a windscreen wiper device according to Claim 5 or 6, **characterized in that** the sealing element (21, 30, 41) has an encircling sealing lip (22) pressing against the body.

8. Body with a windscreen wiper device according to one of Claims 5 to 7, **characterized in that** the shaped tube (10) and/or the fastening plate (32) have/has a latching element (31) for fixing the sealing element (30).

9. Body with a windscreen wiper device according to one of Claims 5 to 8, **characterized in that** the sealing element (21, 30, 41) is likewise matched to the corrugated cross section of the projection (11, 23).

10. Body with a windscreen wiper device according to one of Claims 5 to 9, **characterized in that** the sealing element (21, 30, 41) is manufactured from an elastomer.

## Revendications

1. Carrosserie comprenant un dispositif d'essuie-glace, en particulier pour un véhicule automobile, comprenant un tube moulé (10) connecté à la carrosserie (13) et/ou comprenant une tôle de fixation (20, 32, 40) connectée à la carrosserie (13), qui est notamment une tôle de fixation (20, 32, 40) pour un moteur d'essuie-glace, le tube moulé (10) et/ou la tôle de fixation (20, 32, 40) étant fixés de manière amovible à la carrosserie (13), de sorte que le tube moulé (10) et/ou la tôle de fixation (20, 32, 40) puissent être enlevés de la carrosserie (13) dans le cas d'un impact sur le dispositif d'essuie-glace, **caractérisée en ce que** la carrosserie (13), pour recevoir le tube moulé (10) ou la tôle de fixation (20, 32, 40), présente une ouverture de réception (12) qui est pourvue d'une fente latérale (16), et **en ce que** le contour de l'ouverture de réception (12) est adapté à une section transversale ondulée de la saillie (11) du tube moulé (10) et/ou à une section transversale ondulée de la saillie (23) de la tôle de fixation (20, 32, 40).

2. Carrosserie comprenant un dispositif d'essuie-glace selon la revendication 1,
**caractérisée en ce que** l'ouverture de réception (12) présente un bord rabattu (18).

3. Carrosserie comprenant un dispositif d'essuie-glace selon la revendication 1 ou 2, **caractérisée en ce que** l'ouverture de réception (12) est disposée dans une région de la carrosserie faisant saillie depuis la carrosserie (13).

4. Carrosserie comprenant un dispositif d'essuie-glace selon l'une quelconque des revendications 1 à 3, **caractérisée en ce que** la saillie (11, 23) du tube moulé (10) et/ou de la tôle de fixation (20, 32, 40) peut être enfichée dans l'ouverture de réception (12) dans la carrosserie (13).

5. Carrosserie comprenant un dispositif d'essuie-glace selon l'une quelconque des revendications 1 à 4, **caractérisée en ce qu'**entre le tube moulé (10) et la carrosserie (13) et/ou entre la tôle de fixation (20, 32, 40) et la carrosserie (13) est prévu un élément d'étanchéité (21, 30, 41).

6. Carrosserie comprenant un dispositif d'essuie-glace selon la revendication 5, **caractérisée en ce que** l'élément d'étanchéité (21, 30, 41) présente une ouverture pour recevoir le tube moulé (10) ou la tôle de fixation (20, 32, 40).

7. Carrosserie comprenant un dispositif d'essuie-glace selon la revendication 5 ou 6,
**caractérisée en ce que** l'élément d'étanchéité (21, 30, 41) présente une lèvre d'étanchéité (22) périphérique, pressant contre la carrosserie.

8. Carrosserie comprenant un dispositif d'essuie-glace selon l'une quelconque des revendications 5 à 7, **caractérisée en ce que** le tube moulé (10) et/ou la tôle de fixation (32) présentent un élément d'encliquetage (31) pour la fixation de l'élément d'étanchéité (30).

9. Carrosserie comprenant un dispositif d'essuie-glace selon l'une quelconque des revendications 5 à 8, **caractérisée en ce que** l'élément d'étanchéité (21, 30, 41) est également adapté à la section transversale ondulée de la saillie (11, 23).

10. Carrosserie comprenant un dispositif d'essuie-glace selon l'une quelconque des revendications 5 à 9,
**caractérisée en ce que** l'élément d'étanchéité (21, 30, 41) est fabriqué à partir d'un élastomère.
